## Europäisches Patentamt

## European Patent Office

## Office européen des brevets

(19)

(11) Veröffentlichungsnummer: **0 240 747**
**B1**

(12) **EUROPÄISCHE PATENTSCHRIFT**

(45) Veröffentlichungstag der Patentschrift:
18.04.90

(21) Anmeldenummer: 87103302.3

(22) Anmeldetag: 07.03.87

(51) Int. Cl.⁴: **B60J 1/20**, E04F 10/06,
E06B 9/68

(54) **Führungsloses Fensterrollo, insbesondere für Kraftfahrzeuge.**

(30) Priorität: 11.04.86 DE 3612165

(43) Veröffentlichungstag der Anmeldung:
14.10.87 Patentblatt 87/42

(45) Bekanntmachung des Hinweises auf die Patenterteilung:
18.04.90 Patentblatt 90/16

(84) Benannte Vertragsstaaten:
DE ES FR GB IT SE

(56) Entgegenhaltungen:
EP-A- 0 221 573
DE-A- 3 532 013
FR-A- 2 588 307
GB-A- 580 217
US-A- 1 594 643
US-A- 1 630 416
US-A- 2 079 073

(73) Patentinhaber: Baumeister + Ostler, Waldstrasse 34,
D-7307 Aichwald 3 (Aichschiess)(DE)

(72) Erfinder: Ament, Eduard, Beutelsbacher Strasse 22,
D-7307 Aichwald - 2(DE)

(74) Vertreter: Rüger, Rudolf, Dr.-Ing. et al, Patentanwälte
Dr.-Ing. R. Rüger Dipl.-Ing. H.P. Barthelt
Webergasse 3 Postfach 348,
D-7300 Esslingen/Neckar(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Fensterrollo, insbesondere für Kraftfahrzeuge, mit den Merkmalen des Oberbegriffs des Anspruches 1.

Ein solches -gattungsgemäßes - Fensterrollo ist aus der DE-A 3 226 400 bekannt. Dieses Fensterrollo enthält einen kastenartigen Sockel, in dem neben der Wickelwelle auch die Antriebseinrichtung zum fernbetätigten Ausfahren der Rollobahn untergebracht ist. Die Betätigung der Rollobahn erfolgt mittels eines biegeelastischen Schubgliedes, dessen freies Ende mit der Zugstange der Rollobahn verbunden ist und das neben dem Fenster in einem geschlitzten Rohr durch die Antriebseinrichtung vorschiebbar ist. Das Rohr übernimmt deswegen beim Ausfahren der Rollobahn die Führungsfunktion und sorgt dafür, daß sich die Rollobahn ordnungsgemäß vor dem zu schützenden Fenster befindet.

Diese in der Praxis sehr bewährte Konstruktion vermeidet Antriebs- und Betätigungselemente, die der Wickelwelle gegenüber am anderen Ende des Rollobahnendes notwendig wären. Es treten deswegen auch keine Verringerungen der Kopffreiheit für die Fondinsassen eines Kraftfahrzeuges auf, vor dessen stark schräg geneigten Heckscheibe das bekannte Fensterrollo vorgesehen ist.

Außerdem erleichtert sich bei der bekannten Konstruktion wesentlich der nachträgliche Einbau.

Allerdings bleibt bei dem bekannten Fensterrollo das Führungsrohr unabhängig davon, ob die Rollobahn aus- oder eingefahren ist, immer sichtbar.

Außerdem kann das bekannte Fensterrollo nicht bei Kraftfahrzeugen mit Heckklappe verwendet werden, weil sich dort beim Öffnen der Heckklappe die Abstände zwischen der Hutablage und der Oberkante des Heckfensters ändern, was zu einem Ausrasten des Führungsrohres aus seinem oberen Haltestück führen würde.

Bei einem aus der US-A 1 630 416 bekannten Fensterrollo sind zwei im Bereich der Enden der Wickelwelle schwenkbar angebrachte Hebel vorgesehen, deren beide freie Enden gleitend mit der Zugstange verbunden sind. Das Ausfahren des bekannten Seitenfensterrollos erfolgt von Hand, indem die Zugstange von der Wickelwelle weggezogen wird. Dabei wickelt sich die Rollobahn entgegen der Kraft der in der Wickelwelle befindlichen Feder ab. Gleichzeitig hiermit schwenken die Hebel nach außen, die bei vollständig ausgefahrenem Rollo rechtwinklig zu der Achse der Wickelwelle verlaufen und die Zugstange unterstützen. Die Hebel verhindern solange ein erneutes Aufwickeln der Rollobahn, bis sie ebenfalls von Hand in Richtung auf die Wickelwelle eingeklappt werden.

Ausgehend hiervon (DE-A 3 226 400) ist es Aufgabe der Erfindung, ein Fensterrollo, insbesondere für Kraftfahrzeuge zu schaffen, das unter Beibehaltung der Vorteile des gattungsgemäßen Fensterrollos ohne starre Führungsglieder auskommt.

Erfindungsgemäß wird diese Aufgabe durch ein Fensterrollo mit den Merkmalen des Anspruches 1 gelöst.

Die Verwendung des steifen Betätigungselementes, das sich beim Ausfahren der Rollobahn in einer zu der Rollobahn parallelen Ebene bewegt, macht es möglich, im Kraftfahrzeug starr installierte Führungseinrichtungen, die den Weg der Zugstange festlegen, zu vermeiden. Der Bewegungsweg der Zugstange wird bei dem neuen Fensterrollo in seiner Längsrichtung durch die Seitensteifigkeit der Rollobahn in dieser Richtung festgelegt, während der Weg senkrecht dazu durch den Bewegungsweg des Betätigungselementes definiert ist. Die Zugstange wird deswegen auch ohne Führungsglieder in zwei zueinander senkrechten Richtungen zwangsläufig geführt.

Andererseits ist bei eingefahrener Rollobahn auch das Betätigungselement mit zurückgefahren und damit außer Sicht, denn es befindet sich ständig zwischen der Wickelwelle und der Zugstange.

Da starre Führungsglieder für die Zugstange fehlen, läßt sich das neue Fensterrollo auch bei Fahrzeugen mit Heckklappe verwenden, weil zumindest im eingefahrenen Zustand keine Verbindung zwischen Teilen des Fensterrollos und der Heckkappe besteht, wenn das Fensterrollo auf der Hutablage angeordnet ist.

Zum Vorschieben der Zugstange der Rollobahn kommen grundsätzlich zwei Ausführungsformen in Frage, wobei die eine Ausführungsform einen oder zwei in der Nähe der Wickelwelle schwenkbar gelagerte Hebel und die andere Ausführungsform ein oder zwei in der Nähe der Wickelwelle fest angebrachte Teleskopstäbe vorsieht. Die erste Ausführungsform hat den Vorteil, konstruktiv und herstellungsmäßig einfacher als die zweite Ausführungsform zu sein, während die zweite Ausführungsform längere Rollobahnen gestattet und zum Ausfahren gleichmäßigere Betätigungskräfte erfordert.

Die Ausführungsform mit Hebel kann entweder einen oder zwei spiegelsymmetrisch aufgebaute und angeordnete Hebel enthalten, wobei die Lösung mit zwei Hebeln ungleichmäßige Längskräfte in der Zugstange zu vermeiden hilft, wenn beide Hebel gegensinnig schwenken, so daß die in der Zugstange auftretenden Reibkräfte sich gegenseitig weitgehend aufheben. Es kann deswegen auch eine Rollobahn mit geringerer Seitenführungskraft eingesetzt werden.

Ein Verkanten der Zugstange läßt sich weitgehend vermeiden, wenn die Hebel mit ihren freien Enden in Verlängerung der auszufahrenden Tuchbahn angreifen, was dadurch möglich ist, daß die Hebel an ihren freien Enden einen senkrecht zu der Rollobahnebene vorstehenden Fortsatz tragen. Wenn dieser Fortsatz darüber hinaus gegenüber der Längsachse des Hebels seitlich versetzt ist, können die Hebel ohne Behinderung durch die Zugstange sehr weit zurückschwenken, bis in eine Lage, in der sie nahezu parallel zu der eingefahrenen Zugstange verlaufen.

Wenn die Rollobahnlänge kleiner ist als die halbe Breite der Wickelwelle können die beiden Hebel ohne weiteres in derselben Nut der Zugstange entlanglaufen, während im Falle einer Rollobahn, die länger als die halbe Wickelwellenbreite ist, zweckmäßigerweise für jeden Hebel eine eigene Nut vorgesehen ist, damit die Hebel aneinander vorbeilaufen können, da sie dann länger sein müssen als die halbe Entfernung zwischen ihren Schwenklagerstellen.

Der Antrieb des oder der Hebel erfolgt bei Fahrzeugen, die sonst keinen Pneumatik- oder Hydraulikantrieb enthalten, mittels eines Elektromotors, der über ein Getriebe eine oder zwei Zahnstangen – je nach Anzahl der Schwenkhebel – antreibt, die in dem Getriebegehäuse längsverschieblich gelagert sind und über Kuppelstangen mit dem oder den Hebeln getrieblich verbunden sind. Eine andere Ausführungsform sieht die Verwendung von ein oder zwei Kurbeln vor, die ebenfalls über Kuppelstangen mit den Hebeln getrieblich verbunden sind.

Bei Fahrzeugen, die für andere Zwecke ohnehin Pneumatikantriebe enthalten, geschieht die Betätigung der Hebel bevorzugt durch zweiseitig wirkende Druckmittelzylinder, deren Kolbenstangen gelenkig mit dem bzw. den Hebeln getrieblich verbunden sind.

Bei Verwendung eines oder mehrerer Teleskopstäbe als Betätigungselemente zum Ausfahren der Rollobahn sind vorteilhafterweise im Inneren des Teleskopstabes biegeelastische Schubglieder enthalten, die mittels der Antriebseinrichtung aus einem Speicher vor- und zurückschiebbar sind, wobei ihr vorderes freies Ende mit dem letzten Glied des Teleskopstabes verbunden ist, so daß beim Vor- bzw. Zurückschieben der Teleskopstab aus- bzw. eingefahren wird.

Um bei voll ausgefahrenem Fensterrollo ein Schwingen der Anordnung, das bevorzugt in Richtung senkrecht zu der Rollobahnebene auftritt, zu vermeiden, können am Ende des Bewegungswegs der Zugstange eines oder mehrere Haltestücke vorgesehen sein, in die die Zugstange einfährt. Auf diese Weise werden das oder die Betätigungselemente im ausgefahrenen Zustand der Rollobahn beidseitig in der Karosserie verankert.

Die Halterung kann dabei zwischen dem Haltestück und der Karosserie oder in einem V-förmigen Maul des Haltestückes erfolgen.

In der Zeichnung sind Ausführungsbeispiele des Gegenstandes der Erfindung dargestellt. Es zeigen:

Fig. 1 ein in einem Kraftfahrzeug angeordnetes Fensterrollo mit zwei gegensinnig bewegbaren Hebeln zum Betätigen der Zugstange in einer perspektivischen Darstellung,

Fig. 2 die Lagerstelle eines der beiden Hebel in einer vergrößerten perspektivischen Darstellung,

Fig. 3 einen Schnitt durch die Lagerstelle nach Fig. 2, entlang der Linie A-A aus Fig. 2,

Fig. 4 das in der Zugstange gleitende freie Ende eines der Hebel des Fensterrollos nach Fig. 1, in einer vergrößerten perspektivischen Darstellung,

Fig. 5 eine Antriebseinrichtung für die Hebel des Fensterrollos nach Fig. 1 unter Verwendung von Zahnstangen, in einer vergrößerten perspektivischen Darstellung,

Fig. 6 eine Antriebseinrichtung zur Betätigung der Hebel des Fensterrollos nach Fig. 1 unter Verwendung eines Kurbelantriebs,

Fig. 7 zwei zweiseitig wirkende Druckmittelzylinder zur Betätigung der Hebel des Fensterrollos nach Fig. 1,

Fig. 8 eine andere Ausführungsform des erfindungsgemäßen Fensterrollos, wobei die beiden Hebel etwa in der Mitte der Wickelwelle schwenkbar gelagert sind,

Fig. 9 ein weiteres Ausführungsbeispiel des Fensterrollos gemäß der Erfindung, bei dem das Betätigungselement von einem Teleskopstab gebildet ist, ebenfalls in perspektivischer Darstellung,

Fig. 10 ein in einem Kraftfahrzeug angeordnetes Fensterrollo gemäß der Erfindung mit zwei gegensinnig bewegbaren Hebeln, die etwa auf einem Drittel der Länge des Sockels drehbar gelagert sind, in einer perspektivischen Darstellung,

Fig. 11 die Antriebseinrichtung für das Fensterrollo nach Fig. 10 in einer Draufsicht und

Fig. 12 die Führung und den Antrieb des Lochbandes der Antriebseinrichtung nach Fig. 11 in vergrößerter perspektivischer Darstellung.

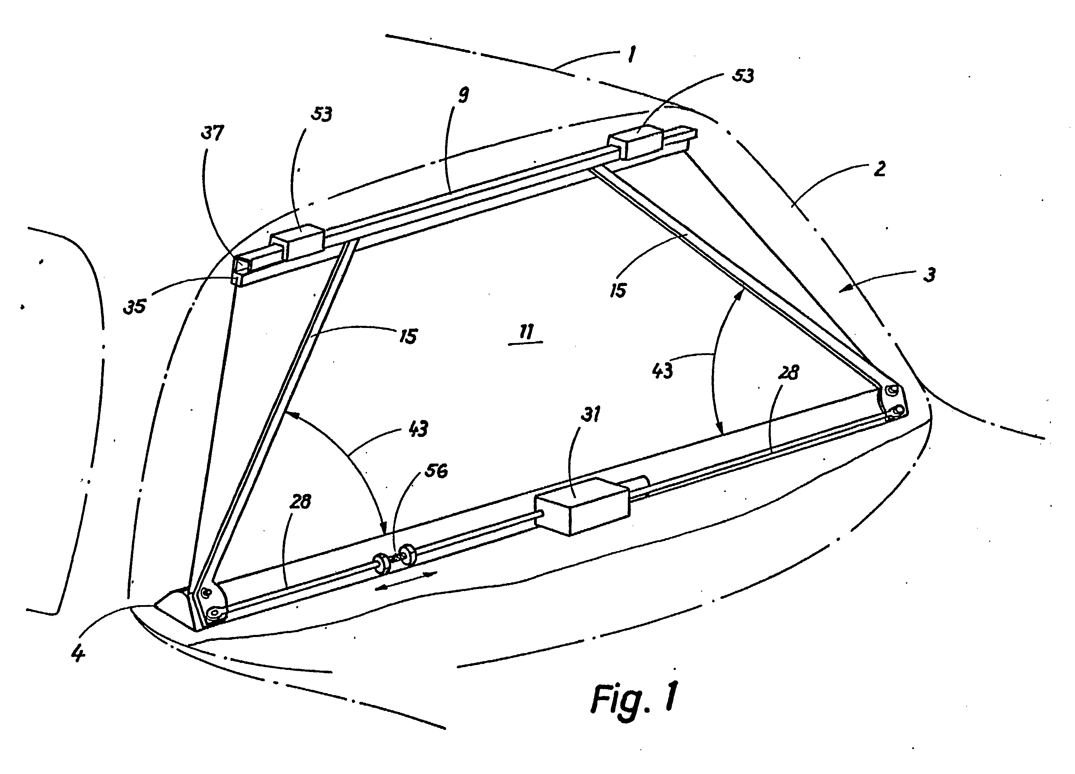

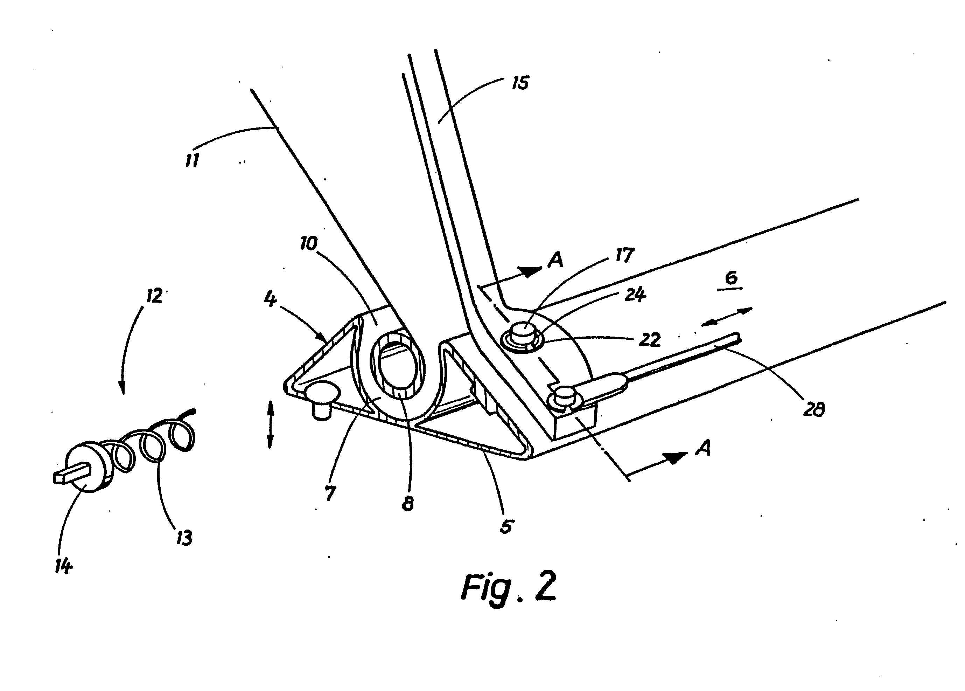

In Fig. 1 ist durch strichpunktierte Linien schematisiert die Heckpartie eines Kraftfahrzeuges 1 angedeutet, vor dessen Heckscheibe 2 im Inneren des Kraftfahrzeuges 1 ein Fensterrollo 3 angeordnet ist, das in Fig. 1 in der ausgefahrenen Stellung gezeigt ist. Das Fensterrollo 3 enthält gemäß Fig. 2 einen im Querschnitt etwa dreieckförmigen durchgehenden Sockel 4 mit einer Unterseite 5 und einer schräg dazu verlaufenden Seitenwand 6. Im Inneren enthält der beispielsweise mittels Schrauben auf der Hutablage zu befestigende Sockel 4 eine sich über seine gesamte Länge erstreckende, im Querschnitt etwa zylindrische Nut 7, in der sich eine endseitig in dem Sockel 4 gelagerte rohrförmige Wickelwelle 8 befindet. Die Nut 7 öffnet sich in einem an die Seitenwand 6 angrenzenden Schlitz 9 nach oben, d.h. von der Grundfläche 5 weg.

An der Außenseite der Wickelwelle 8 ist eine Rollobahn 11 mit einer Kante befestigt, deren gegenüberliegende Kante in einer Zugstange 9 steckt, die in jeder Betriebsstellung des Fensterrollos 3 parallel zu der Längsachse der Wickelwelle 8 verläuft.

Im Inneren der Wickelwelle 8 befindet sich ein Federmotor 12, der eine Wickelfeder 13 aufweist, von der ein Ende in der rohrförmigen Wickelwelle 8 verankert ist und deren anderes Ende in einem Lagerstück 14 steckt, das drehfest in dem Sockel 4 befestigt ist. Durch diesen Federmotor 12 ist die Wickelwelle 8 im Sinne eines Aufwickelns der Rollobahn 11 auf die Wickelwelle 8 vorgespannt, so daß, wenn keine äußeren Kräfte an der Zugstange 9 angreifen, diese durch die Kraft des Federmotors 12 an dem Schlitz 10 infolge der aufgewickelten Rollobahn 11 anliegend gehalten ist.

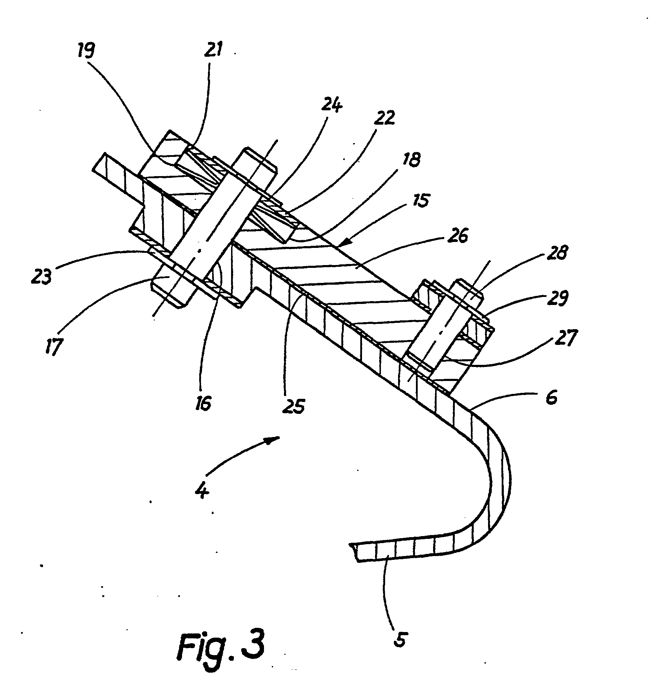

Zum Ausfahren und Aufgespannthalten der Rollobahn 11 sind auf der schräg verlaufenden Seitenwand 6 in der Nähe der Enden des Sockels 4 zwei zweiarmige Hebel 15 schwenkbar gelagert. Die beiden Hebel sind spiegelsymmetrisch gleich und laufen mit ihren von den Lagerstellen an dem Sockel 4 abliegenden freien Enden in einer Nut der Zugstange 9. Wegen des im übrigen gleichen Aufbaus der beiden Hebel 15 genügt es nachfolgend lediglich einen zusammen mit seiner Lagerung im einzelnen zu beschreiben. Die Lagerung ist im einzelnen in den Fig. 2 und 3 veranschaulicht.

Zur Lagerung jedes der beiden Hebel 15 sitzt in der Nähe des entsprechenden Endes des Sockels 4 in einer Bohrung 16 in der Seitenwand 6 ein zylindrischer Schwenkzapfen 17, auf den der entsprechende Hebel aufgesteckt ist, der hierzu eine Stufenbohrung 18 enthält. Der kleinere Durchmesser der Stufenbohrung 18 entspricht dem Außendurchmesser des Schwenkzapfens 17, während der Bereich mit dem größeren Durchmesser der Aufnahme zweier Tellerfedern 19 und 21 dient, von denen die Tellerfeder 19 sich an der Ringschulter der Stufenbohrung 18 abstützt, während sich die Tellerfeder 21 auf einer in der Stufenbohrung 18 angeordneten Beilagscheibe 22 abstützt. Um die beiden Tellerfedern 19 und 21 gespannt zu halten, trägt der Schwenkzapfen 17 in entsprechenden Nuten zwei Wellensicherungsringe 23 und 24. Der Wellensicherungsring 23 legt sich gegen die Rückseite der Wand 6 und der Wellensicherungsring 24 an die Außenseite der Beilagscheibe 22 an. Auf diese Weise wird der Hebel 15 ständig in Achsrichtung des zylindrischen Bolzens 17 auf die Außenseite der Wand 6 vorgespannt, wobei zur Verringerung der Reibkraft zwischen der planen Unterseite des Hebels 15 und der planen Oberseite der Wand 6 eine Kunststoffzwischenlage 25 vorgesehen ist.

Die Schwenkbetätigung des bzw. der Hebel 15 geschieht über einen Arm oder Fortsatz 26, der über den Schwenkzapfen 17 in radialer Richtung hinausragt.

In dem von dem Schwenkzapfen 17 abliegenden Ende des Armes 26 steckt in einer zu der Stufenbohrung 18 achsparallelen Bohrung 27, beispielsweise mit Preßsitz, ein zylindrischer Kurbelzapfen 30, auf dessen nach oben aus dem Arm 26 hinausragenden Abschnitt eine Kuppelstange 28 gelenkig aufgesteckt ist. Um ein Abgleiten der Kuppelstange 28 von dem Kurbelzapfen zu verhindern, trägt dieser in einer entsprechenden Nut einen Wellensicherungsring 29, der die Kuppelstange 28 zwischen sich und der nach außen weisenden Oberseite des Armes 26 festlegt. Die Kuppelstange 28 führt zu einer Antriebseinrichtung 31, die etwa in der Mitte zwischen den beiden Schwenkzapfen 17 für die beiden Hebel 15 auf der Wand 6 des Sockels 4 befestigt ist. Durch diese Antriebseinrichtung 31 können die beiden zu den Hebeln 15 führenden Kuppelstangen 28 gegensinnig in ihrer Längsrichtung bewegt werden, um den Arm 26 des zugehörigen Hebels 15 um den Schwenkzapfen 17 begrenzt zu drehen.

Damit bei der Betätigung über die Kuppelstangen 28 günstige Kräfteverhältnisse auftreten, ist der Arm 26 des Hebels 15 so ausgebildet, daß die die Bohrung 27 und die Stufenbohrung 18 schneidende Normale gegenüber einer Verbindungsgeraden geneigt ist, die von der Achse der Stufenbohrung 18 zu dem in der Nut laufenden freien Ende des Hebels 15 führt. Die Abwinkelung ist derart gewählt, daß, wenn die beiden Hebel 15 etwa parallel zu der Wickelwelle 8 verlaufen, was im eingefahrenen Zustand des Fensterrollos 3 der Fall ist, die Normale, die die beiden Achsen der Stufenbohrung 18 und der Bohrung 27 schneidet, mit der zugehörigen Kuppelstange 28 einen Winkel von ca. 70°bis 80° einschließt.

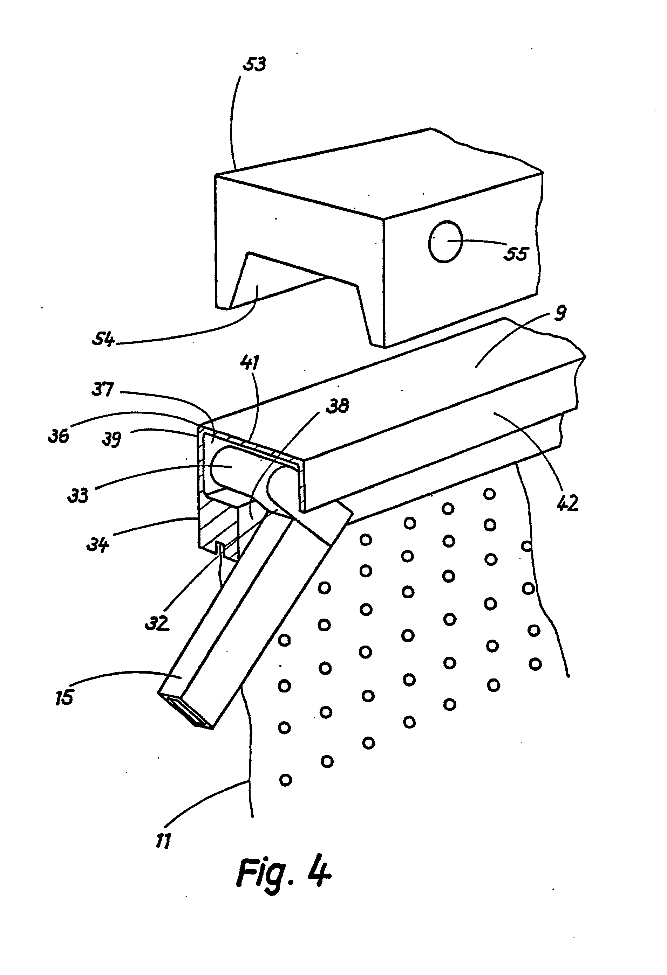

Die Führung der Hebel 15 in der Zugstange 9 ist in Fig. 4 vergrößert veranschaulicht. Die Hebel 15, von denen in Fig. 4 aus Darstellungsgründen lediglich einer gezeigt ist, tragen an ihrem freien, von dem Schwenkzapfen 17 abliegenden Ende ein Kunststofformstück 32, das mit einem Zapfen von der Stirnseite her in den Hebel 15 eingesteckt ist. Rechtwinklig dazu trägt das Kunststofformstück 32 einer vorzugsweise zylindrischen Fortsatz 33, der von dem Kunststofformstück 32 in Richtung auf die Rollobahn 11 vorsteht und etwa achsparallel zu dem Schwenkzapfen 17 ist. Dieser Fortsatz 33 ist, wie die Fig. 4 zeigt, gegenüber dem Hebel 15 nach oben, d.h. in Richtung auf das Ausziehen der Rollobahn 11 versetzt, wodurch erreicht wird, daß, wenn die Zugstange 9 bei eingefahrenem Fensterrollo 3 an dem Schlitz 10 anliegt, die Hebel 15 mit ihren langen sich zwischen dem Kunststofformstück 32 und dem Schwenkzapfen 17 erstreckenden Arm ungehindert etwa parallel zu der Zugstange 9 bzw. Wickelwelle 8 liegen können.

Die Zugstange 9 weist das ebenfalls aus Fig. 4 ersichtliche Querschnittsprofil auf und besteht aus einem im Querschnitt etwa rechteckigen Stabprofil 34, das an einer Längsseite einen, beispielsweise in Fig. 1 erkennbaren Schlitz 35 enthält, in den die Rollobahn 11 mit ihrer Vorderkante eingesteckt und dort gehaltert ist. Auf der von der Rollobahn 11 wegweisenden Rückseite ist an den Stab 34 eine Wand 36 angeformt, die dachartig die Rückseite des Stabes 34 übergreift, so daß sich ein im Querschnitt etwa rechteckiger, über die gesamte Länge des Zugstabes 9 erstreckender Hohlraum 37 ergibt, der lediglich über einen neben der Seitenfläche des Stabes 34 in Richtung auf die Wickelwelle 8 offenen Schlitz 38 von unten her zugänglich ist. Der Hohlraum 37 wird deswegen von der Rückseite des Stabes 34, einer Rückseite 39, einer Oberseite 41 und einer Vorderseite 42 der Wand 36 begrenzt, und bildet die Nut für das freie Ende der Hebel 15.

In dem länglichen Hohlraum 37 ist längsverschieblich der Fortsatz 33 mit geringem Spiel in Längsrichtung bezüglich der Zugstange 9 geführt, wobei der Halsabschnitt des Kunststofformteils 32, der den Fortsatz 33 mit dem in dem Hebel 15 steckenden Zapfen verbindet, durch den nach unten offenen Schlitz 38 in den nutartigen Hohlraum 37 hineinführt. Infolge der abgekröpften Anordnung des Kunststofformteils 32 wirkt die zwischen dem Hebel 15 und der Zugstange 9 entstehende Kraft in Verlängerung der Rollobahn 11, was ein Kippen der Zugstange 9 gegenüber der Rollobahn und auf den Hebeln 15 weitgehend vermeidet. Andererseits kann die Zugstange 9 auch nicht von den Fortsätzen 33 in Achsrichtung der zylindrischen Fortsätze 33 heruntergleiten, weil sich in diesem Falle die Vorderseite 42 an dem Kunststofformstück 32 in Verlängerung des zylindrischen Fortsatzes 33 anlegen würde. Die Zugstange 9 und die Hebel 15 sind bei dieser Ausführungsform in zwei Richtungen formschlüssig miteinander verbunden, nämlich in Richtung parallel zur Auszugsrichtung der Rollobahn 11 und einer Richtung, die senkrecht auf der von der ausgezogenen Rollobahn 11 gebildeten Rollobahnebene steht.

Da der sich zwischen dem Kunststofformstück 32 und dem Schwenkzapfen 17 erstreckende Arm jedes der Hebel 15 rechtwinklig zu der Achse des Schwenkzapfens 17 verläuft, erfolgt bei einem Schwenken der Hebel 15, wie dies in Fig. 1 durch Doppelpfeile 43 angedeutet ist, ein Ausziehen der Rollobahn 11 aus dem Sockel 4 in einer Ebene, die die beiden Schwenkzapfen 17 der beiden Hebel 15 rechtwinklig schneidet. Bei der gezeigten Ausführungsform hat deswegen die Wand 6 auch eine Neigung, die gleich der Neigung der ausgefahrenen Rollobahn 11 gegenüber der Horizontalen ist, wenn der Sockel 4 mit seiner Unterseite 5 auf einer horizontalen Fläche montiert ist. Die Wand 6 bildet zusammen mit der Kuntstoffzwischenlage 25 eine entsprechend großflächige Führungsfläche für die Hebel 15, die im Bereich des Schwenkzapfens, wie Fig. 2 zeigt, verbreitert ausgeführt sind. Hierdurch wird eine sehr stabile und schwingungsunempfindliche Führung erhalten.

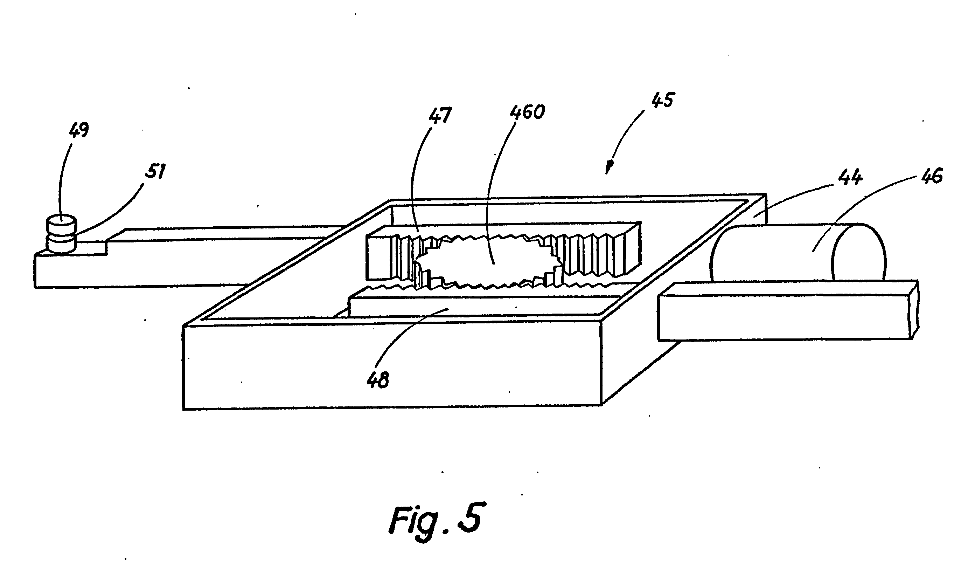

Die auf der Wand 6 des Sockels 4 montierte Antriebseinrichtung 31 hat den in Fig. 5 schematisch gezeigten Aufbau. An einer Seitenwand 44 eines etwa quaderförmigen Getriebegehäuses 45 ist ein Elektromotor 46 angeflanscht, dessen Ausgangswelle in das Innere des Getriebegehäuses 45 führt. Dort treibt die Ausgangswelle ein Untersetzungsgetriebe, dessen Ausgangszahnrad 460 mit zwei Zahnstangen 47 und 48 in Eingriff steht. Die beiden Zahnstangen 47 und 48 stehen mit dem Ausgangszahnrad 460 diametral bezüglich dessen Drehachse in Eingriff, womit bei einer Drehung des Ausgangszahnrades 460 beide Zahnstangen 47 und 48 eine gegenläufige Bewegung vollführen. Die beiden Zahnstangen 47 und 48 sind in dem Getriebegehäuse 45 zueinander achsparallel und zu der Drehachse des Ausgangszahnrades 460 rechtwinklig längsverschieblich gelagert, und zwar mit Hilfe bekannter, in Fig. 5 aus Übersichtlichkeitsgründen nicht dargestellter Führungselemente.

Zur getrieblichen Verbindung mit den Kuppelstangen 28 tragen die beiden Zahnstangen 47 und 48 auf ihrem aus dem Getriebegehäuse 45 hinausragenden Ende einen Verbindungszapfen 49, auf den die entsprechende Kuppelstange 28 mit einer Öse aufgesteckt ist. Die Sicherung der Kuppelstange 28 auf dem Verbindungszapfen 49 erfolgt mit einem Wellensicherungsring, der in eine in den Verbindungszapfen 49 eingestochenen Nut 51 eingesetzt ist und die Kuppelstange 28 gegen die Zahnstange 47 bzw. 48 festhält.

Zur Erläuterung der Funktionsweise des insoweit beschriebenen Fensterrollos 3 sei angenommen, daß die Rollobahn 11 durch die Kraft des Federmotors 12 vollständig auf die Wickelwelle 8 aufgewickelt ist, d.h. sich im Inneren des Sockels 4 befindet, wobei die Zugstange 9 mit ihrer Unterkante an dem Rand des Schlitzes 1 Oanliegt. In dieser Stellung verlaufen die beiden Hebel 15 mit ihren längeren, in der Zugstange 9 eingreifenden Armen parallel zur Wickelwelle 8 und auch parallel zu der Zugstange 9. Da beide Hebel 15 in der Nähe der äußeren Enden des Sockels 4 angelenkt sind, stehen sich in dieser Stellung ihre Kunststoffformstücke 32 im Bereich der Mitte des Sockels 4 in einem mehr oder weniger großen Abstand einander gegenüber.

Wenn, ausgehend von dieser Ruhestellung, der Elektromotor 46 in Gang gesetzt wird, beginnt sich das Ausgangszahnrad 460 im Uhrzeigersinne zu drehen und zieht die beiden Zahnstangen 47 und 48 in gegenläufigen Bewegungen in das Getriebegehäuse 45 hinein. Hierdurch werden die beiden Kuppelstanger 28 aufeinander zu bewegt und verschwenken die Fortsätze 26 der beiden Hebel 15. Gleichzeitig werden dadurch die längeren Arme der Hebel 15, ausgehend von der Stellung, in der sie parallel zu der Wickelwelle 8 verlaufen, von dem Sockel 4 weggeschwenkt, wobei sie sich auf den Schwenkzapfen 17 drehen. Da die freien Enden der Hebel 15 mit den Formstücken 32 in der Nut 37 der Zugstange 9 stecken, wird durch die von dem Sockel 4 weggerichtete Schwenkbewegung der Hebel 15 die Zugstange 9 von dem Schlitz 10 gegen die Kraft des Federmotors 12 weggezogen und die Rollobahn 11 aus dem Schlitz 10 herausgezogen, wobei sie sich gleichzeitig von der Wickelwelle 8 abwickelt. Während der Schwenkbewegung entfernen sich gleichzeitig die Kunststofformstücke 32, d.h. die freien Enden der Hebel 15 voneinander und gleiten in der Nut 37 der Zugstange 9 in Richtung auf deren außenliegende Enden.

Durch diese Schwenkbewegung der beiden Hebel 15 wird die Rollobahn 11 in einer Ebene aus dem Sockel 4 herausgezogen, die senkrecht zu den Schwenkzapfen 17 verläuft, d.h. parallel zu der Schwenkebene der Hebel 15 liegt.

Sobald der gewünschte Auszug erreicht ist, wird der Motor 46 stillgesetzt und die selbsthemmende Wirkung der Antriebseinrichtung 31 hält die beiden Hebel 15 in der jeweiligen Schwenkstellung fest. Die selbsthemmende Wirkung kommt beispielsweise durch das Haftmoment des Elektromotors 46 in Verbindung mit dem Untersetzungsverhältnis des Getriebes bis zu dem Ausgangszahnrad 46 zustande. Zusätzliche Bremsen sind deswegen entbehrlich.

Um in der voll ausgefahrenen Stellung ein Schwingen der Hebel 15 und damit der Rollobahn 11 um eine zu der Wickelwelle 8 parallelen Achse zu vermeiden, sind an der Stelle, an der sich die Zugstange 9 bei voll ausgefahrenem Fensterrollo 3 befindet, also vorzugsweise an der Oberkante des Heckfensters 2, zwei Haltestücke 53 vorgesehen, die die in Fig. 4 im einzelnen gezeigte Gestalt haben. Die Haltestücke 53 sind etwa quaderförmig und enthalten eine in Richtung auf den Sockel 4 zu offene, im Querschnitt etwa V- oder trapezförmige Nut 54, in der die Zugstange 9 mit ihrer Oberseite 41 zu liegen kommt. Die Befestigung der Haltestücke erfolgt beispielsweise mittels Schrauben, die durch Bohrungen 55 hindurch in die Karosserie eingedreht sind, oder durch Kleben an der Heckscheibe 2. Im voll ausgefahrenen Zustand ist somit die Zugstange 9 in den Nuten 54 spielfrei gefangen, wobei die Vorspannkraft der Hebel 15 für ein festes Anliegen in der Nut 54 sorgt. Das V-förmige Öffnen der Nut 54 in Richtung auf den Sockel 4 erleichtert das Einfahren der Zugstange 9, wenn das Fensterrollo 3 infolge von Fahrbahnerschütterungen während des Ausfahrens schwingt. Außerdem werden Fluchtungsungenauigkeiten hierdurch ausgeglichen.

Zum Einfahren des Fensterrollos 3 wird die Antriebseinrichtung in umgekehrter Richtung in Bewegung gesetzt, wobei das Ausgangszahnrad 460, angetrieben durch den Elektromotor 46, die beiden Zahnstangen 47 und 48 aus dem Getriebegehäuse 45 gegensinnig vorschiebt. Hierdurch wird den Armen 26 eine entsprechende Schwenkbewegung erteilt, was die längeren Arme der Hebel 15 ebenfalls in einer Schwenkbewegung in Richtung auf den Sockel 4 zurückklappen läßt. Gleichzeitig während dieser Schwenkbewegung laufen die freien Enden der Hebel 15 mit den Kunststofformstücken 32 in der Nut 37 aufeinander zu und lassen so die Zugstange 9 sich dem Sockel 4 nähern. Der in der Wickelwelle 8 vorgesehene Federmotor 12 dreht gleichzeitig die Wickelwelle 8 in Aufwickelrichtung, die die Rollobahn 11 aufwickelt.

In jeder Stellung der Hebel 15 unterstützen diese die Rollobahn 11 in einer Richtung, in der sie selbst praktisch keine Festigkeit aufweist, nämlich senkrecht zu der Rollobahnebene. Es werden deswegen zur Führung der Zugstange 9 auch keine weiteren fest vor dem Fenster 2 verbleibenden Führungseinrichtungen benötigt, die bei eingefahrenem Fensterrollo 3 noch sichtbar wären. Vielmehr verschwinden die auch die Führungsfunktion erbringenden Betätigungselemente in Gestalt der Hebel 15 aus dem Sichtbereich in dem Maße, in dem die Rollobahn 11 im Inneren des gehäuseartigen Sockels 4 auf der Wickelwelle 8 aufgewickelt wird.

Diese Halte- und Führungsfunktion für die Zugstange 9 wird von den beiden Hebeln 15 auch bei starker Neigung des Fensterrollos 3 erbracht.

Der Einfahrvorgang ist beendet, wenn schließlich die Zugstange 9 an dem Schlitz 10 anliegt. Die Antriebseinrichtung 31 wird bei Erreichen dieser Stellung, in der die beiden Hebel 15 mit ihren längeren Armen wieder parallel zu der Wickelwelle 8 verlaufen, stillgesetzt.

Damit die beiden Hebel 15 auf gleiche Winkellage justiert werden können, enthält entweder eine der beiden Zugstangen 28 eine in Fig. 1 gezeigte Längenausgleichseinrichtung 56, die ähnlich einem Spannschloß ausgebildet ist oder aber die Antriebseinrichtung 31 läßt sich zwecks Justage und Angleichung der Winkellage der beiden Hebel 15 auf dem Sockel 4 parallel zu der Wickelwelle 8 verscheben und in der gewünschten Stellung fixieren.

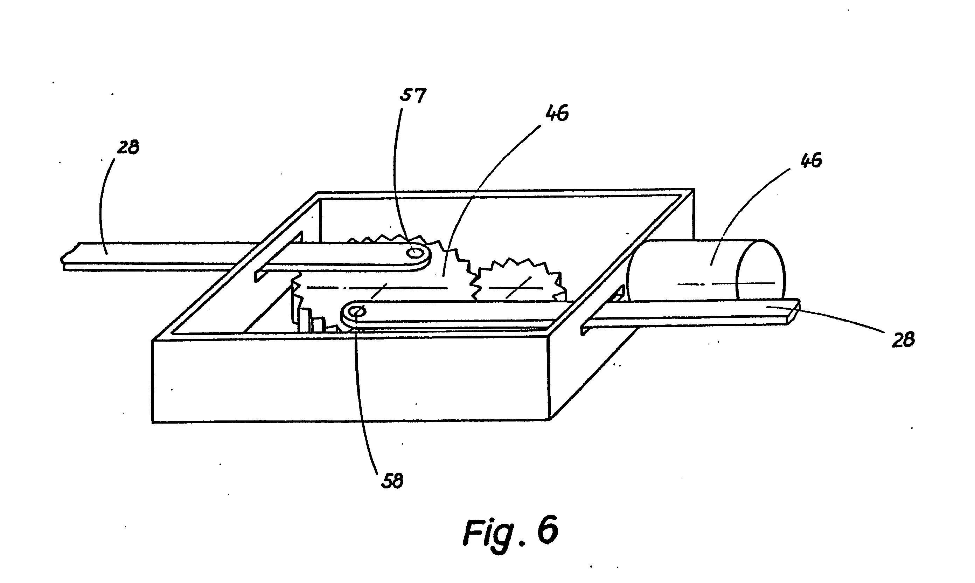

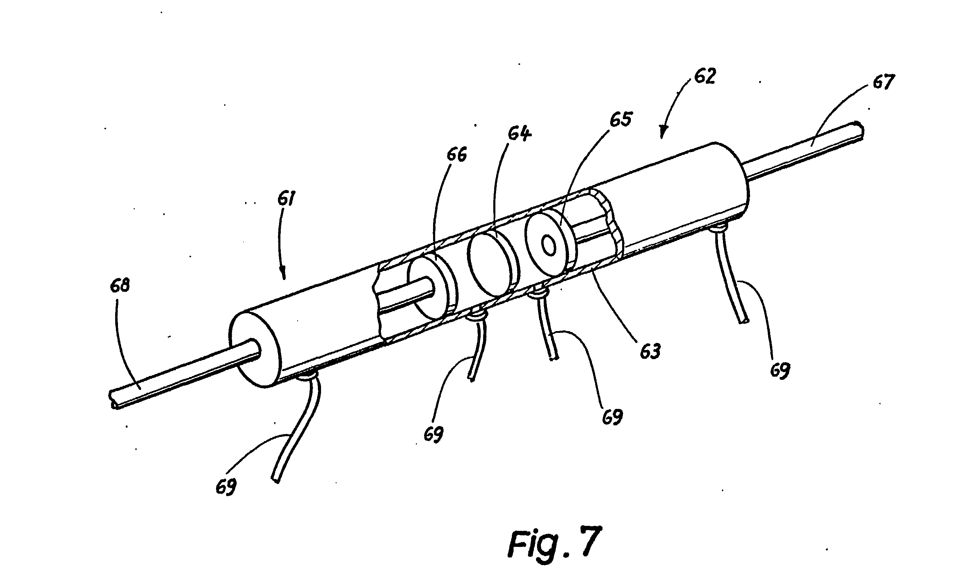

Eine andere Form der Antriebseinrichtung ist in den Fig. 6 und 7 dargestellt, wobei sich die Ausführungsform nach Fig. 6 von der nach Fig. 5 dadurch unterscheidet, daß keine Zahnstangen 47 und 48 verwendet werden. Das Ausgangszahnrad 460 trägt stattdessen zwei sich diametral bezüglich der Drehachse des Ausgangszahnrades 460 gegenüberliegende Kurbelzapfen 57 und 58, auf denen die Kuppelstangen 28 mit entsprechenden Ösen unmittelbar eingehängt sind. Auch bei dieser Ausführungsform wird den Kuppelstangen 28 eine gegenläufige Bewegung in ihrer Längsrichtung erteilt, was beim Einschalten des Elektromotors 46 dann zum entsprechenden Verschwenken der beiden Hebel 15 führt.

Bei Anwendungen in Kraftfahrzeugen, die für andere Zwecke bereits Pneumatiksteuerungen enthalten, ist es zweckmäßig, als aktives Glied der Antriebseinrichtung 31 zwei doppelt wirkende pneumatische Druckmittelzylinder 61 und 62 vorzusehen, die beispielsweise in einem gemeinsamen Zylinderrohr 63 ausgebildet sein können, wobei die Zylinder durch eine mittlere Scheidewand 64 voneinander getrennt sind. In den so entstehenden Zylinderabschnitten gleiten zwei Kolben 65 und 66, deren Kolbenstangen 67 und 68 abgedichtet aus dem Zylinderrohr 63 herausgeführt sind. Die Kolbenstangen 67 und 68 sind, wie vorher beschrieben, mit den Kuppelstangen 28 gelenkig verbunden, die zu den Hebeln 15 führen. Durch Zufuhr von Druckluft oder Unterdruck über Anschlüsse 69 werden die Kolben wahlweise nach innen in Richtung auf die Scheidewand 64 oder nach außen zu den Stirnseiten des Zylinderrohrs 63 bewegt, womit ihre Kolbenstangen 67 und 68 gegenläufig gerichtete Bewegungen ausführen, die wiederum die Hebel 15 betriebsmäßig verschwenken.

Bei dem Ausführungsbeispiel nach Fig. 1 sind die beiden Hebel 15 in der Nähe der außenliegenden Enden des Sockels 4 angelenkt und haben zusammen eine Länge, die geringer ist als der Abstand der beiden Schwenkzapfen 17 voneinander, so daß die Hebel 15 in derselben Nut der Zugstange 9 laufen können. Diese Anordnung setzt allerdings voraus, daß die Auszugslänge der Rollobahn 11 entsprechend klein ist. Falls größere Auszugslängen erforderlich sind, die länger sind als der halbe Abstand zwischen den beiden Schwenkzapfen 17, werden die beiden Schwenkhebel 15 in unterschiedlichen Ebenen auf dem Sockel 4 gelagert und laufen mit ihren freien Enden in entsprechend gestaffelten Nuten der Zugstange 9, wobei jedem der beiden Schwenkhebel 15 eine Nut in der Zugstange 9 zugeordnet ist. Bei eingefahrenem Rollo, d.h. in der Ruhestellung, liegen dann die beiden Hebel 15 mit ihren längeren Armen praktisch übereinander und laufen beim Ausfahren von dieser Stellung ausgehend in Richtung auf das zugehörige äußere Ende der Zugstange 9.

Die Lagerung der Hebel 15 an den außenliegenden Enden des Sockels 4 hat den Vorteil, daß das teilweise ausgefahrene Fensterrollo 3 weitgehend unempfindlich ist gegen Schwingungen um eine Achse, die in der Rollobahnebene liegt und etwa senkrecht auf der Wickelwelle 8 steht.

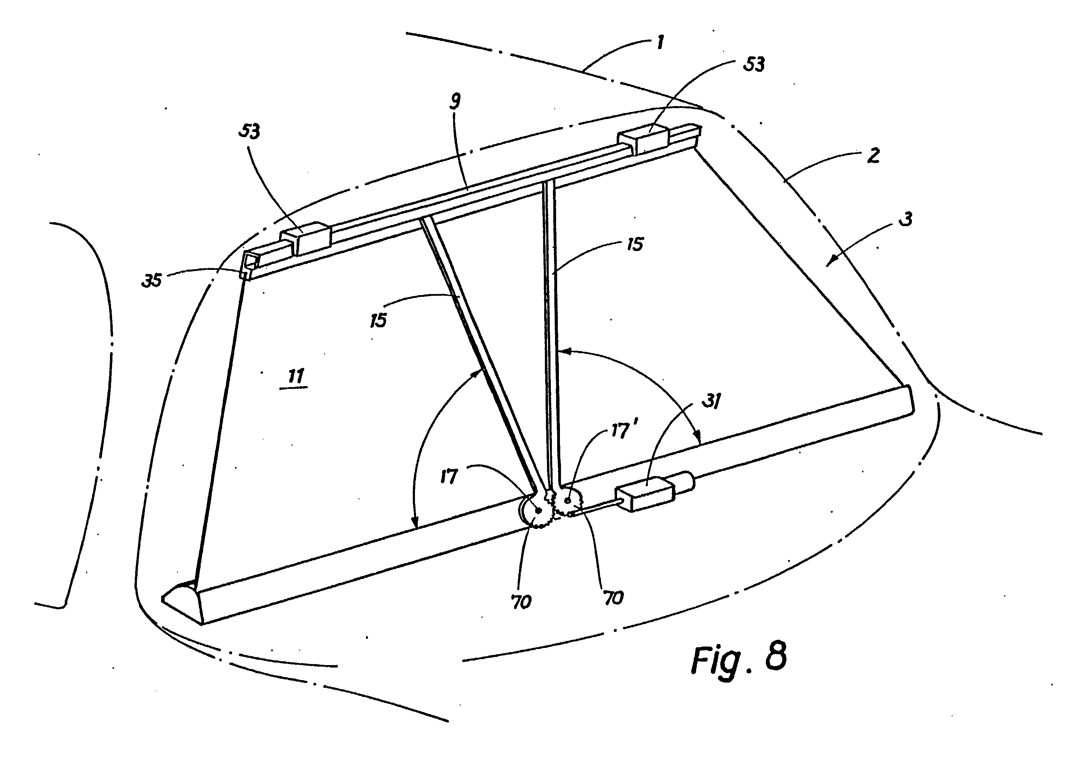

In Fig. 8 ist eine andere Ausführungsform des Fensterrollos 3 veranschaulicht, bei der die beiden Hebel 15 auf dem Sockel 4 in der Mitte von dessen Längserstreckung unmittelbar nebeneinander gelagert sind und im Bereich ihrer Lagerstelle mit Zahnrädern 70 versehen sind, die konzentrisch zu den Schwenkzapfen 17 sind. Der Abstand der beiden Schwenkzapfen 17 ist so gewählt, daß die beiden Zahnräder 70 ohne weiteres miteinander kämmen, damit , wenn der eine der beiden Hebel 15, ausgehend von seiner Ruhelage in die aufgerichtete Lage, aus Fig. 8 geschwenkt wird, auch der andere Hebel gegensinnig dieser Schwenkbewegung folgt. Es ist bei dieser Anordnung möglich, mittels der Antriebseinrichtung 31 lediglich einen der beiden Hebel 15 anzutreiben, wobei der Antrieb des anderen Hebels über die miteinander in Eingriff stehenden beiden Zahnräder 70 erfolgt. Im übrigen ist der Aufbau des Fensterrollos 3 und der Antriebseinrichtung 31 wie vorher beschrieben.

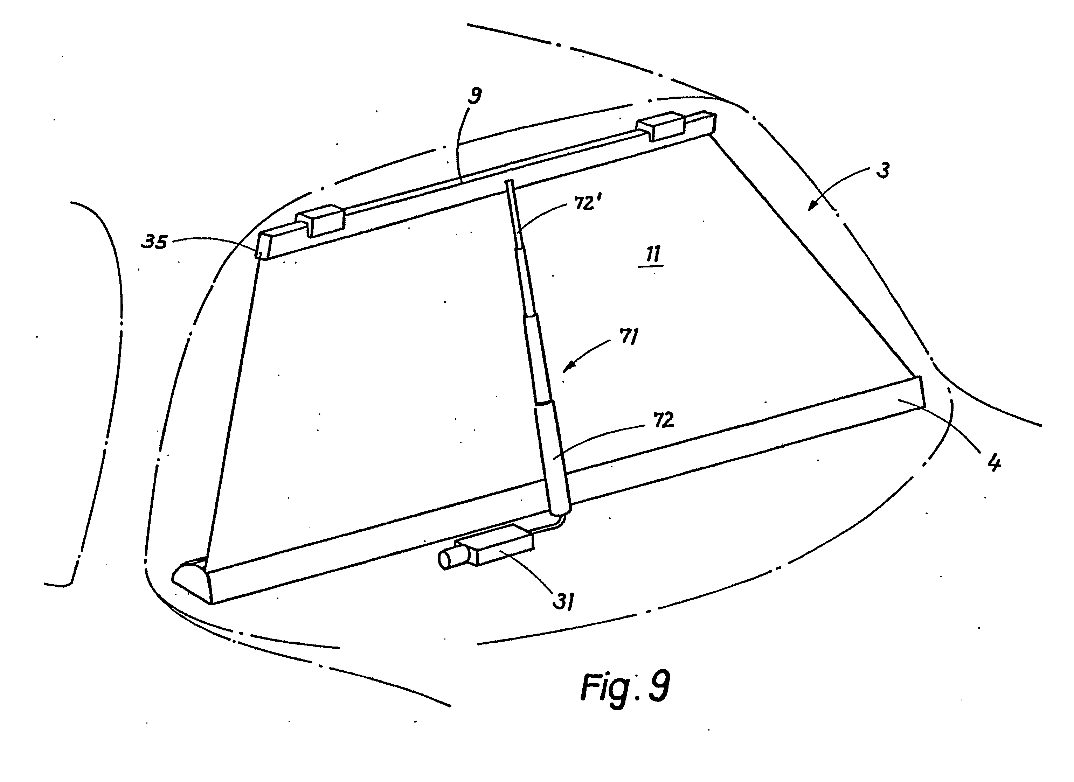

Fig. 9 zeigt schließlich ein Fensterrollo 3, bei dem das Betätigungselement zum Bewegen und Halten der Zugstange 9 von einem Teleskopstab 71 gebildet ist, dessen Fuß an dem Sockel 4 angebracht ist und der aus einer Vielzahl teleskopartig ineinander bewegbarer rohrartiger Teleskopglieder 72 besteht. Das letzte, obere Teleskopglied ist mit seinem freien Ende mit der Zugstange 9 verbunden. Die Zugstange 9 ist ein einfacher Stab, der lediglich die Nut 35 zur Aufnahme der Rollobahn 11 enthält. Im Inneren des Teleskopstabes 71 ist ein biegeelastisches Schubglied vorgesehen, das durch die Antriebseinrichtung 31 in den Teleskopstab 71 vorschiebbar bzw. aus diesem zurückziehbar ist und dessen freies Ende mit dem obersten, an der Zugstange 9 angebrachten Teleskopglied 72' verbunden ist.

Durch Ingangsetzen der Antriebseinrichtung 31 kann mittels des Schubgliedes der Teleskopstab 71 ein- bzw. ausgefahren werden, wobei dementsprechend die Zugstange 9 der Bewegung der Spitze des Teleskopstabes 71 folgt und dementsprechend die Rollobahn 11 aus dem gehäuseartigen Sockel herauszieht oder sich in dem Sockel 4 auf die Wickelwelle 8 aufwickeln läßt. Die Bewegungsbahn der Rollobahn 11 und der Zugstange 9 wird bei dieser Ausführungsform von dem Neigungswinkel des Teleskopstabes 71 vorgegeben, der rechtwinklig zu der Wickelwelle verlaufend befestigt ist.

Falls ein einziger Teleskopstab zu schwach ist, um bei einer stark geneigten Rollobahn 11 die notwendigen Kräfte aufbringen zu können, ist es auch möglich, zwei oder mehrere derartige Teleskopstäbe 71 längs des Sockels 4 und damit auch längs der Zugstange 9 verteilt angeordnet anzubringen, die dann synchron durch die Antriebseinrichtung ein- bzw. ausgefahren werden.

Die Antriebseinrichtung 31 kann zur Betätigung des Schubgliedes, wie in den DE-OSen 32 36 400 und 34 15 930 gezeigt, aufgebaut sein.

Bei allen Ausführungsformen des neuen Fensterrollos 3 erbringen die Betätigungselemente zum Bewegen der Zugstange 9 gleichzeitig eine Haltefunktion bezüglich der Richtung, in der die Rollobahn 11 keinerlei Steifigkeit aufweist. Hierdurch ist es möglich, ohne zusätzliche Führungseinrichtungen für die Zugstange 9 auszukommen und es sind deswegen bei eingefahrenem Fensterrollo 3 im Bereich des Fensters keine Führungsteile oder -schienen mehr sichtbar. Die das Fensterrollo 3 im aufgespannten Zustand haltenden Betätigungselemente sind ebenfalls zu dem Sockel 4 hin zurückgefahren und damit unsichtbar.

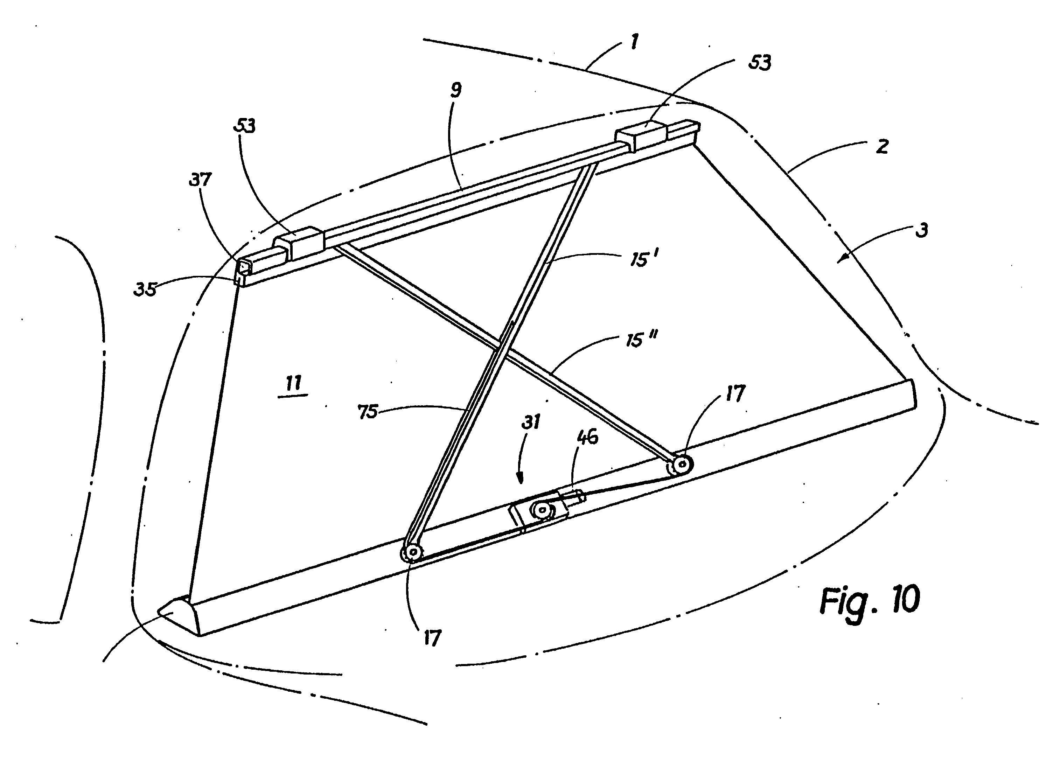

Fig. 10 zeigt ein Fensterrollo 3, bei dem die Lagerstellen für die beiden Hebel 15, d.h. die Schwenkzapfen 17, etwa bei einem Drittel der Längserstreckung des Sockels 4, gemessen von der jeweils benachbarten Stirnseite aus, angeordnet sind. Diese Anordnung hat den Vorteil, daß der Sockel 4 im Bereich seiner Enden keinen Aufbau trägt und deshalb dichter an die Innenseite der Heckscheibe 2 herangerückt montierbar ist, da sich die aufbauenden Teile, nämlich die Lagerung der beiden Hebel 15, im Bereich der Wölbung der Heckscheibe befinden.

Um einen genügenden Auszugweg für die Rollobahn 11 zu schaffen, sind die beiden Hebel 15 gekreuzt angeordnet und laufen in derselben Nut 37 der Zugstange 9. Aus Festigkeitsgründen und um die Symmetrie möglichst wenig zu beeinträchtigen, ist die Überkreuzung der Hebel 15 derart ausgeführt, daß der eine der beiden Hebel, der Hebel 15', in einem entsprechenden Bereich, beginnend etwa bei dem Schwenkzapfen 17, in Richtung auf sein freies, in der Nut 37 laufendes Ende mit einem Längsschlitz 75 versehen ist, durch den der andere Hebel 15" hindurchführt.

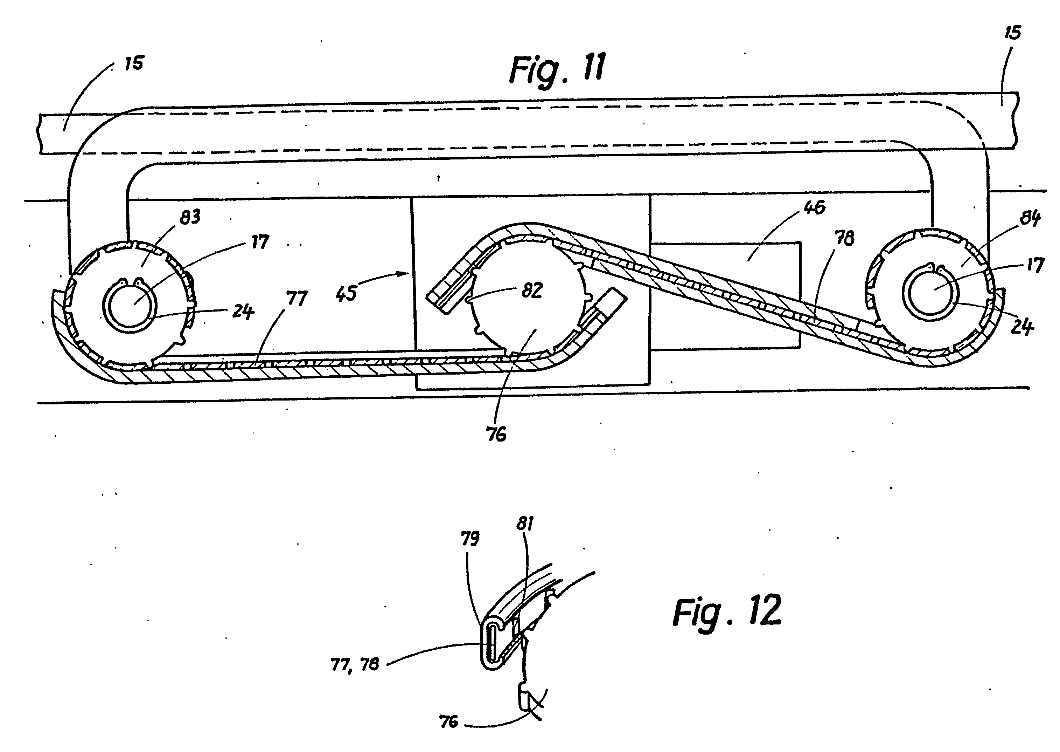

Die Antriebseinrichtung 31 ist in Fig. 11 im einzelnen veranschaulicht. Sie enthält wiederum ein durch einen Elektromotor 46 in Gang zu setzendes Getriebe, dessen Ausgangszahnrad 76 mit zwei Lochbändern 77 und 78 in Eingriff steht, die die Betätigungskraft von der Antriebseinrichtung 31 auf die beiden Hebel 15 überträgt. Wie Fig. 12 vergrößert zeigt, bestehen beide Lochbänder 77 und 78 aus einem Kunststoffband mit flachem Querschnitt, das äquidistant verteilte rechteckige Öffnungen enthält, deren Längsachse rechtwinklig zu der Längserstreckung des Bandes ausgerichtet ist. Diese biegeelastischen Lochbänder 77 und 78 sind, wenn sie in entsprechenden, etwa C-förmigen Führungen 79 geführt sind, in der Lage, sowohl Zug- als auch begrenzt Druckkräfte zu übertragen. Hierbei verhindert die im Querschnitt C-förmige Führungsschiene 79, in der das Lochband 77 bzw. 78 gleitend geführt ist, ein Ausknicken, wenn das Band auf Druck beansprucht wird.

Der Antrieb der beiden Lochbänder 77 und 78 erfolgt durch das Ausgangszahnrad 76, das auf seiner Außenumfangsfläche auf die Öffnungen 81 in dem Lochband abgestimmte Transportzähne 82 trägt.

Mit den beiden Hebeln 15 sind an ihrem Fuß- oder Schwenkpunkt entsprechende ähnliche Zahnräder 83 und 84 drehfest verbunden, die auf den Schwenkzapfen 17, wie vorher beschrieben, gelagert sind. Das Heruntergleiten der Zahnräder 83 und 84 verhindern die Wellensicherungsringe 24.

Die die drucksteife Führung der Lochbänder 77 und 78 erbringenden Führungsschienen 79 erstrecken sich einerseits zwischen dem Ausgangszahnrad 76 und dem Zahnrad 83 und andererseits zwischen dem Ausgangszahnrad 76 und dem Zahnrad 84, wobei in beiden Fällen die Führungsschienen 79 etwa über einen Umfangswinkel von ca. 90° um die Zahnräder 83 und 84 herumgeführt sind, und die Zähne der beiden Zahnräder 83 und 84 durch die schlitzförmige Öffnung der C-förmigen Führungsschienen 79 hindurch in die Transportöffnungen 81 der Lochbänder 77 und 78 eingreifen.

An dem Ausgangszahnrad 76 sind die Führungsschienen, wie in Fig. 11 gezeigt, vorbeigeführt, wodurch die beiden Lochbänder 77 und 78 auf bezüglich der Drehachse des Ausgangszahnrades 76 entgegenliegenden Seiten mit dem Ausgangszahnrad 76 in Eingriff stehen. Bei einem Ingangsetzen des Ausgangszahnrades 76 im Gegenuhrzeigersinne werden deshalb beide Lochbänder 77 und 78 in Richtung auf das Ausgangszahnrad 76 gezogen, wodurch die beiden Hebel 15, die in Fig. 11 in ihrer Ruhelage gezeigt sind, in gegenläufigen Bewegungen aufwärts geschwenkt werden. Dabei wickeln sich die beiden Lochbänder 77 und 78 von den Zahnrädern 83 und 84 teilweise ab. Zum Einfahren wird das Ausgangszahnrad 76 im Uhrzeigersinne in Gang gesetzt und die Lochbänder 77 und 78 verschwenken die beiden Hebel 15 in Richtung auf ihre gezeigte Ruhelage. Die hierfür erforderliche Druckkraft ist verhältnismäßig gering, da die Rollobahn 11 ohnehin durch den Federmotor 12 in Aufwickelrichtung vorgespannt ist, was den beiden Hebeln 15 bei ausreichender Schräglage bereits ebenfalls eine Vorspannkraft in Richtung auf ihre Ruhestellung gemäß Fig. 11 erteilt. Diese erforderliche Druckkraft können die beiden Lochbänder 77 und 78 in ihren Führungsschienen 79 ohne weiteres aufbringen.

## Patentansprüche

1. Fensterrollo, insbesondere für Kraftfahrzeuge, mit einer in einem Sockel (4) drehbar gelagerten und einer in Aufrollrichtung vorgespannte Federeinrichtung (12) aufweisenden Wickelwelle (8), an der die Rollobahn (11) mit einer Kante befestigt ist, deren andere Kante an einer Zugstange (9) befestigt ist, an der zum Abwickeln der Rollobahn (11) entgegen der Vorspannung der Federeinrichtung (12) wenigstens ein sich beim Ausfahren der Rollobahn in einer zu dieser Rollobahnebene (11) parallelen Ebene bewegendes Betätigungselement (15, 71) einer im Bereich der Wickelwelle (8) angeordneten Betätigungseinrichtung angreift, wobei der Betätigungseinrichtung zum fernbetätigten Ausfahren der Rollobahn eine Antriebseinrichtung (31) zugeordnet ist, dadurch gekennzeichnet, daß das Betätigungselement (15, 71) zumindest in einer zu der von der ausgefahrenen Rollobahn (11) definierten Rollobahnebene senkrechten Richtung im wesentlichen biegesteif ist und daß lediglich das biegesteife Betätigungselement (15, 71) in jeder seiner Stellungen die Zugstange 9 in der zu der Rollobahnebene senkrechten Richtung führt.

2. Fensterrollo nach Anspruch 1, dadurch gekennzeichnet, daß das Betätigungselement als im Bereich der Wickelwelle (8) vorzugsweise an dem Sockel (4) gelagerter Hebel (15) ausgebildet ist, der mittels einer zu der Betätigungseinrichtung gehörigen Antriebseinrichtung (31) zwischen einer Ruhestellung und einer ausgeklappten Stellung hin- und herschwenkbar ist, und daß der Hebel (15) mit seinem von der jeweiligen Lagerstelle (17) abliegenden Ende mit der Zugstange (9) gleitfähig verbunden ist.

3. Fensterrollo nach Anspruch 2, dadurch gekennzeichnet, daß der Hebel (15) in der Ruhestellung, in der die Rollobahn (11) eingefahren ist, zu der Wickelwelle (8) etwa parallel verläuft.

4. Fensterrollo nach Anspruch 2, dadurch gekennzeichnet, daß der Hebel (15) in der ausgefahrenen Stellung, die der ausgefahrenen Stellung der Rollobahn (11) entspricht, zu der Rollobahnebene etwa parallel verläuft.

5. Fensterrollo nach Anspruch 2, dadurch gekennzeichnet, daß die Schwenkachse (17) des Hebels (15) rechtwinklig zu der Wickelwelle (8) verläuft.

6. Fensterrollo nach Anspruch 2, dadurch gekennzeichnet, daß das freie Ende des Hebels (15) einen in Richtung auf die Rollobahnebene vorragenden Fortsatz (33) trägt, der gleitfähig in einer Nut (37) der Zugstange (9) aufgenommen und gelagert ist.

7. Fensterrollo nach Anspruch 6, dadurch gekennzeichnet, daß der Fortsatz (33) in Richtung auf die ausgefahrene Stellung gegenüber der Längsachse des Hebels (15) versetzt ist.

8. Fensterrollo nach Anspruch 6, dadurch gekennzeichnet, daß die Nut (37) eine Wand (42) aufweist, die den Fortsatz (33) an seiner Rückseite umgreift.

9. Fensterrollo nach Anspruch 2, dadurch gekennzeichnet, daß der Hebel (15) als zweiarmiger Hebel ausgebildet ist, von dem ein Arm an der Zugstange (9) angreift und der andere Arm (26) getrieblich mit der Antriebseinrichtung (31) gekuppelt ist.

10. Fensterrollo nach Anspruch 1, dadurch gekennzeichnet, daß die Betätigungseinrichtung zwei Betätigungselemente aufweist, die beide als Hebel (15) nach einem oder mehreren der Ansprüche 2 bis 9 ausgebildet sind.

11. Fensterrollo nach Anspruch 10, dadurch gekennzeichnet, daß die beiden Hebel (15) spiegelsymmetrisch gleich sind.

12. Fensterrollo nach Anspruch 10, dadurch gekennzeichnet, daß jeder der beiden Hebel (15) in einer eigenen Nut in der Zugstange (9) läuft.

13. Fensterrollo nach Anspruch 10, dadurch gekennzeichnet, daß beide Hebel (15) in derselben Nut (37) der Zugstange (9) laufen.

14. Fensterrollo nach Anspruch 10 dadurch gekennzeichnet, daß die beiden Hebel (15) bei ihrer Verschwenkung durch die Antriebseinrichtung (31) sich gegensinnig bewegen.

15. Fensterrollo nach Anspruch 10, dadurch gekennzeichnet, daß die beiden Hebel (15) in der Nähe der Enden der Wickelwelle (8) gelagert sind.

16. Fensterrollo nach Anspruch 10, dadurch gekennzeichnet, daß die beiden Hebel (15) in der Nähe der Mitte der Wickelwelle (8) gelagert sind.

17. Fensterrollo nach Anspruch 10, dadurch gekennzeichnet, daß die beiden Hebel (15) unmittelbar miteinander getrieblich gekuppelt sind.

18. Fensterrollo nach den Ansprüchen 16 und 17, dadurch gekennzeichnet, daß die beiden Hebel (15) drehfest ein zu ihrer Schwenkachse koaxiales Zahnrad (70) tragen und beide Zahnräder (70) miteinander in Eingriff stehen, und daß einer der Hebel (15) mit der Antriebseinrichtung (31) gekuppelt ist.

19. Fensterrollo nach Anspruch 1, dadurch gekennzeichnet, daß die Antriebseinrichtung (31) einen Elektromotor (46) enthält, dessen Ausgangswelle über ein Untersetzungsgetriebe wenigstens eine in einem Getriebegehäuse (45) längsverschieblich geführte Zahnstange (47, 48) antreibt, die über eine Kuppelstange (28) mit dem Betätigungselement (15) verbunden ist.

20. Fensterrollo nach Anspruch 19, dadurch gekennzeichnet, daß ein Ausgangszahnrad (460) des Untersetzungsgetriebes zwei Zahnstangen (47, 48) gegensinnig antreibt, von denen jede über eine Kuppelstange (28) mit dem zugehörigen Hebel (15) verbunden ist.

21. Fensterrollo nach Anspruch 1, dadurch gekennzeichnet, daß die Antriebseinrichtung (31) einen Elektromotor (46) enthält, dessen Ausgangswelle über ein Untersetzungsgetriebe wenigstens eine Kurbel (57, 58) antreibt, die über eine Kuppelstange (28) mit dem zugehörigen Hebel (15) verbunden ist.

22. Fensterrollo nach Anspruch 1, dadurch gekennzeichnet, daß die Antriebseinrichtung (31) einen oder zwei zweiseitig wirkende Druckmittelzylinder (61, 62) aufweist, dessen bzw. deren Kolbenstange (67, 68) mit dem bzw. den zugehörigen Hebeln (15) getrieblich verbunden ist bzw. sind.

23. Fensterrollo nach Anspruch 1, dadurch gekennzeichnet, daß das Betätigungselement ein aus mehreren rohrförmigen Gliedern (72) bestehender Teleskopstab (71) ist, der in Ausziehrichtung der Rollobahn (11) in einer zu der Rollobahnebene parallelen Ebene aus- und einfahrbar ist, und dessen freies bewegbares Ende mit der Zugstange (9) verbunden ist.

24. Fensterrollo nach Anspruch 23, dadurch gekennzeichnet, daß der Teleskopstab (71) in seinem Inneren ein biegeelastisches Schubglied enthält, das getrieblich mit der Antriebseinrichtung (31) gekuppelt und anderenends an dem dem Fuß des Teleskopstabes (71) am weitesten entfernt liegenden Teleskopglied befestigt ist, derart, daß das Schubglied bei seinem Vorschieben aus einem Speicher mittels der Antriebseinrichtung (31) den Teleskopstab (71) aus- und bei seinem Zurückschieben in den Speicher mittels der Antriebseinrichtung (31) den Teleskopstab (71) einfährt.

25. Fensterrollo nach Anspruch 1, dadurch gekennzeichnet, daß die Betätigungseinrichtung zwei oder mehrere Betätigungselemente aufweist, die alle als Teleskopstab (71) nach einem der Ansprüche 23 und/oder 24 ausgebildet sind.

26. Fensterrollo nach Anspruch 1, dadurch gekennzeichnet, daß wenigstens ein Haltestück (53) vorgesehen ist, das in der Nähe des Fensters (2) angebracht ist und die Zugstange (9) bei vollständig ausgefahrener Rollobahn (11) hält.

27. Fensterrollo nach Anspruch 25, dadurch gekennzeichnet, daß das Haltestück (53) zur Aufnahme der Zugstange (9) eine etwa V-förmige, in Richtung auf die Wickelwelle (8) zu offene Nut (54) aufweist.

## Claims

1. A window roller blind, more particularly for motor vehicles, having a winding shaft (8) which is pivotably mounted in a base (4) and has a spring device (12) prestressed in the rolling-up direction and to which the web (11) of the roller blind is attached by one edge, its other edge being attached to a pull rod (9) engaged, for unwinding the web (11) of the roller blind against the prestressing of the spring device (12), by at least one actuating element (15, 71), moving in a plane parallel with the plane of the web (11) of the roller blind when said web is rolled out, of an actuating device disposed in the zone of the winding shaft (8), a driving device (31) being associated with the actuating device for the remote-control unwinding of the web of the roller blind, characterized in that the actuating element (15, 71) is substantially resistant to bending at least in a direction perpendicular to the plane of the roller blind web defined by the unwound web (11) of the roller blind, and solely the actuating element (15, 71) resistant to bending in each of its positions guides the pull rod (9) in the direction perpendicular to the plane of the web of the roller blind.

2. A window roller blind according to claim 1, characterized in that the actuating element takes the form of a lever (15) which is mounted preferably on the base (4) in the zone of the winding shaft (8) and can be pivoted reciprocably between an inoperative position and a hinged-out position by means of a driving device (31) associated with the actuating device, the lever (15) being slidably connected via its end remote from the associated bearing place (17) to the tie rod (9).

3. A window roller blind according to claim 2, characterized in that the lever (15) extends substantially parallel with the winding shaft (8) in the inoperative position, in which the roller blind web (11) is retracted.

4. A window roller blind according to claim 2, characterized in that the lever (15) extends substantially parallel with the web of the roller blind in the unwound position, corresponding to the unwound position of the web (11) of the roller blind.

5. A window roller blind according to claim 2, characterized in that the pivoting axis (17) of the lever (15) extends at right angles to the winding shaft (8).

6. A window roller blind according to claim 2, characterized in that the free end of the lever (15) bears an extension (33) which projects in the direction of the plane of the web of the roller blind and is slidably received and mounted in a groove (37) in the pull rod (9).

7. A window roller blind according to claim 6, characterized in that the extension (33) is offset in relation to the longitudinal axis of the lever (15) in the direction of the unwound position.

8. A window roller blind according to claim 6, characterized in that a groove (37) has a wall (42) engaging around the extension (33) on its rear side.

9. A window roller blind according to claim 2, characterized in that the lever (15) takes the form of a two-armed lever one arm of which engages with the pull rod (9), the other arm (26) being drivably coupled to the driving device (31).

10. A window roller blind according to claim 1, characterized in that the actuating device has two actuating elements, both of which are constructed in the form of levers (15) as set forth in one or more of claims 2 to 9.

11. A window roller blind according to claim 10, characterized in that the two levers (15) are identical in mirror symmetry.

12. A window roller blind according to claim 10, characterized in that each of the two levers (15) runs in its own groove in the pull rod (9).

13. A window roller blind according to claim 10, characterized in that both levers (15) run in the same groove (37) in the pull rod (9).

14. A window roller blind according to claim 10, characterized in that the two levers (15) move to opposite hands when they are pivoted by the driving device (31).

15. A window roller blind according to claim 10, characterized in that the two levers (15) are mounted adjacent the ends of the winding shaft (8).

16. A window roller blind according to claim 10, characterized in that the two levers (15) are mounted adjacent the centre of the winding shaft (8).

17. A window roller blind according to claim 10, characterized in that the two levers (15) are directly drivable coupled to one another.

18. A window roller blind according to claims 16 and 17, characterized in that the two levers (15) bear non-rotatably a gear wheel (70) coaxial with their pivoting axis, the two gear wheels (70) mesh with one another, and one of the levers (15) is coupled to the driving device (31).

19. A window roller blind according to claim 1, characterized in that the driving device (31) comprises an electric motor (46) whose output shaft drives via a step-down transmission at least one rack (47, 48) guided for longitudinal sliding in a transmission casing (45) and connected via a coupling rod (28) to the actuating element (15).

20. A window roller blind according to claim 19, characterized in that an output gear wheel (46) of the step-down transmission drives two racks (47, 48) to opposite hands, each of the racks being connected via a coupling rod (28) to the associated lever (15).

21. A window roller blind according to claim 1, characterized in that the driving device (31) comprises an electric motor (46) whose output shaft drives via a step-down transmission at least one crank (57, 58) which is connected via a coupling rod (28) to the associated lever (15).

22. A window roller blind according to claim 1, characterized in that the driving device (31) has one or two double-action pressure medium cylinders (61, 62) whose piston rod (67, 68) is drivably connected to the or each associated lever (15).

23. A window roller blind according to claim 1, characterized in that the actuating element is a telescopic rod (71) which consists of a number of tubular members (72) and which in the withdrawal direction of the roller blind web (11) can be extended and retracted in a plane parallel with the plane of the web of the roller blind, the free movable end of the telescopic rod (71) being connected to the pull rod (9).

24. A window roller blind according to claim 23, characterized in that the telescopic rod (71) contains a resiliently bendable thrust member which is so coupled drivably to the driving device (31) and so attached at the other end to the telescopic rod member disposed furthest away from the base of the telescopic rod (71) that, when the thrust member on its extension from an accumulator extends the telescopic rod (71) by means of the driving device (31), and when it is retracted into the accumulator retracts the telescopic rod (71) by means of the driving device (31).

25. A window roller blind according to claim 1, characterized in that the actuating device has two or more actuating elements all of which are constructed in the form of a telescopic rod (71) as set forth in one of claims 23 and/or 24.

26. A window roller blind according to claim 1, characterized in that at least one retaining member (53) is provided which is disposed adjacent the window (2) and retains the pull rod (9) when the roller blind web (11) is fully unwound.

27. A window roller blind according to claim 25, characterized in that the retaining member (53) is formed for the reception of the pull rod (9) with a substantially V-shaped groove (54) open in the direction of the winding shaft (8).

## Revendications

1. Store de fenêtre, en particulier pour véhicules automobiles, comportant un arbre d'enroulement (8) monté tournant dans un socle (4) et présentant un dispositif à ressort (12) précontraint dans le sens de l'enroulement, arbre sur lequel la bande de store (11) est fixée par un bord, l'autre bord étant fixé à une tige de traction (9) sur laquelle s'engage, pour le déroulement de la bande de store (11) contre la précontrainte du dispositif à ressort (12), au moins un élément d'actionnement (15, 71) d'un dispositif d'actionnement disposé, dans la zone de l'arbre d'enroulement (8), élément se déplaçant dans un plan parallèle à ce plan (11) de bande de store lors de la sortie de cette dernière, un dispositif d'entraînement (31) étant associé au dispositif d'actionnement en vue de la sortie commandée à distance de la bande du store, caractérisé en ce que l'élément d'actionnement (15, 71) est pratiquement raide en flexion, au moins dans une direction perpendiculaire au plan de bande de store défini par la bande du store (11) déployée, et en ce que seul l'élément d'actionnement (15, 71) raide en flexion guide en chacune de ses positions la tige de traction 9 dans la direction perpendiculaire au plan de la bande du store.

2. Store de fenêtre selon la revendication 1, caractérisé en ce que l'élément d'actionnement est réalisé sous la forme d'un levier (15) monté dans la zone de l'arbre d'enroulement (8), de préférence sur le socle (4), levier pivotant dans les deux sens entre une position de repos et une position écartée, à l'aide d'un dispositif d'entraînement (31) appartenant au dispositif d'actionnement, et en ce que le levier (15) est relié à la tige de traction (9) par son extrémité éloignée du point d'appui respectif (17), de façon à pouvoir glisser.

3. Store de fenêtre selon la revendication 2, caractérisé en ce que, dans la position de repos, dans laquelle la bande de store (11) est rentré, le levier (15) s'étend à peu près parallèlement à l'arbre d'enroulant (8).

4. Store de fenêtre selon la revendication 2, caractérisé en ce que, dans la position déployée qui correspond à la position déployée de la bande de store (11), le levier (15) s'étend à peu près parallèlement au plan de la bande de store.

5. Store de fenêtre selon la revendication 2, caractérisé en ce que l'axe de pivotement (17) du levier (15) s'étend à angle droit par rapport à l'arbre d'enroulement (8).

6. Store de fenêtre selon la revendication 2, caractérisé en ce que l'extrémité libre du levier (15) poste un prolongement (33), faisant saillie en direction du plan de bande de store, qui est reçu et monté, de manière à pouvoir glisser, dans une gorge (37) de la tige de traction (9).

7. Store de fenêtre selon la revendication 6, caractérisé en ce que le prolongement (33) est décalé par rapport à l'axe longitudinal du levier (15), en direction de la position déployée.

8. Store de fenêtre selon la revendication 6, caractérisé en ce que la gorge (37) présente une paroi (42) entourant sur sa face arrière le prolongement (33).

9. Store de fenêtre selon la revendication 2, caractérisé en ce que le levier (15) est réalisé sous la forme d'un levier à deux bras, dont l'un des bras est en prise sur la tige de traction (9) et l'autre bras (26) est accouplé par une transmission au dispositif d'entraînement (31).

10. Store de fenêtre selon la revendication 1, caractérisé en ce que le dispositif d'actionnement présente deux éléments d'actionnement, réalisés tous les deux sous la forme de levier (15), selon une ou plusieurs des revendications 2 à 9.

11. Store de fenêtre selon la revendication 10, caractérise en ce que les deux leviers (15) sont indentiques selon une symétrie par rapport à un miroir.

12. Store de fenêtre selon la revendication 10, caractérisé en ce que chacun des deux leviers (15) se déplace dans une gorge propre pratiquée dans la tige de traction (9).

13. Store de fenêtre selon la revendication 10, caractérisé en ce que les deux leviers (15) se déplacent dans la même gorge (37) de la tige de traction (9).

14. Store de fenêtre selon la revendication 10, caractérisé en ce que les deux leviers (15) se déplacent en sens opposé dans leur pivotement dû au dispositif d'entraînement (31).

15. Store de fenêtre selon la revendication 10, caractérisé en ce que les deux leviers (15) sont montés à proximité des extrémités de l'arbre d'enroulement (8).

16. Store de fenêtre selon la revendication 10, caractérisé en ce que les deux leviers (15) sont montés à proximité du centre de l'arbre d'enroulement (8).

17. Store de fenêtre selon la revendication 10, caractérisé en ce que les deux leviers (15) sont directement accouplés entre eux par une transmission.

18. Store de fenêtre selon les revendications 16 et 17, caractérisé en ce que les deux leviers (15) portent de manière rigide en rotation une roue dentée (70) dont l'axe coincide avec leur axe de pivotement, les deux roues dentées (70) étant en prise l'une avec l'autre, et en ce que l'un des leviers (15) est accouplé au dispositif d'entraînement (31).

19. Store de fenêtre selon la revendication 1, caractérisé en ce que le dispositif d'entraînement (31) contient un moteur électrique (46) dont l'arbre de sortie entraîne par l'intermédiaire d'un réducteur au moins une crémaillère (47, 48), guidée de manière à être mobile longitudinalement dans un carter de transmission (45) et reliée à l'élément d'actionnement (15) par l'intermédiaire d'une tige d'accouplement (28).

20. Store de fenêtre selon la revendication 19, caractérisé en ce qu'une roue dentée de sortie (460) du réducteur entraîne en sens opposés deux crémaillères (47, 48), dont chacune est reliée au levier (15) respectif par l'intermédiaire d'une tige d'accouplement (28).

21. Store de fenêtre selon la revendication 1, caractérisé en ce que le dispositif d'entraînement (31) contient un moteur électrique (46) dont l'arbre ce sortie entraîne par l'intermédiaire d'un réducteur au moins une manivelle (57, 58) qui est reliée au levier (15) respectif par une tige d'accouplement (28).

22. Store de fenêtre selon la revendication 1, caractérisé en ce que le dispositif d'entraînement (31) présente un ou deux cylindres à milieu sous pression (61, 62) à double action, dont la ou les tiges de piston (67, 68) est ou sont reliée (s) par une transmission au (x) levier (s) (15) correspondant(s).

23. Store de fenêtre selon la revendication 1, caractérisé en ce que l'élément d'actionnement est une barre télescopique (71), composée de plusieurs éléments tubulaires (72), qui est déployable et rétractable dans le sens de sortie de la bande de store (11), dans un plan parallèle au plan de la bande de store, et dont l'extrémité libre mobile est reliée à la tige de traction (9).

24. Store de fenêtre selon la revendication 23, caractérisé en ce que la barre télescopique (71) contient à l'intérieur un élément de poussée élastique en flexion, qui est accouplé par une transmission au dispositif d'entraînement (31) et qui est fixé à l'autre extrémité sur l'élément télescopique qui est situé le plus loin du pied de la barre télescopique (71), de façon que l'élément de poussée fasse sortir la barre télescopique (71) lors de son avancée hors d'un magasin, à l'aide du dispositif d'entraînement (31) et qu'il fasse rentrer la barre télescopique (71) lors de son retrait dans le magasin, à l'aide du dispositif d'entraînement (31).

25. Store de fenêtre selon la revendication 1, caractérisé en ce que le dispositif d'actionnement présente deux éléments d'actionnement ou plus, qui sont tous réalisés sous la forme de barre télescopique (71) selon l'une des revendications 23 et/ou 24.

26. Store de fenêtre selon la revendication 1, caractérisé en ce qu'il est prévu au moins une pièce de maintien (53) qui est placée à proximité de la fenêtre (2) et qui maintient la tige de traction (9) lorsque la bande de store (11) est complètement déployée.

27. Store de fenêtre selon la revendication 26, caractérisé en ce que la pièce de maintien (53) présente, en vue de recevoir la tige de traction (9), une gorge (54) à peu près en forme de V, ouverte en direction de l'arbre d'enroulement (8).

Fig. 1

Fig. 2

EP 0 240 747 B1

Fig.3

Fig. 4

*Fig. 5*

EP 0 240 747 B1

Fig. 6

EP 0 240 747 B1

Fig. 7

EP 0 240 747 B1

Fig. 8

Fig. 9

EP 0 240 747 B1

Fig. 10

EP 0 240 747 B1

*Fig. 11*

*Fig. 12*

EP 0 240 747 B1